# EUROPÄISCHE PATENTSCHRIFT

(11) **EP 2 505 315 B1**
(45) Veröffentlichungstag und Bekanntmachung des Hinweises auf die Patenterteilung: **17.06.2015**
(21) Anmeldenummer: 12154408.4
(22) Anmeldetag: 08.02.2012
(51) Int. Cl.: B25F 5/00, B27B 5/08, B28D 1/04

(54) **Elektrisches Werkzeuggerät mit einer Elektronikkühlung**
Electric machine tool with electronics cooling
Machine-outil électrique dotée d'un refroidissement électronique

(30) Priorität: 29.03.2011 DE 102011006369
(43) Veröffentlichungstag der Anmeldung: 03.10.2012
(73) Patentinhaber: HILTI Aktiengesellschaft, 9494 Schaan (LI)
(72) Erfinder: Schittl, Josef, 6712 Thüringen (AT)
(74) Vertreter: Hilti Aktiengesellschaft Corporate Intellectual Property

(56) Entgegenhaltungen:
- EP-A1- 1 281 485
- WO-A1-2010/071054
- WO-A1-2010/146431
- CN-U- 201 730 868

## Beschreibung

Die vorliegende Erfindung betrifft eine elektrische Wandsäge gemäß dem Oberbegriff des Anspruchs 1.

Wandsägen dienen zum Durchtrennen von armierten und nicht-armierten Wänden, Decken und Böden aus Beton oder ähnlichem Untergrund und werden im Hoch- und Tiefbau, bei Sanierungen und Renovierungen eingesetzt. Bei Abbruch- oder Umbauarbeiten kann es erforderlich sein, bereits bestehende Betonwände zu durchtrennen, abzutragen oder Bereiche aus den Betonwänden auszuschneiden.

Bei der abrasiv abtragenden Bearbeitung mit Diamantwerkzeugen ist es erforderlich, das Diamantwerkzeug im Bereich der Bearbeitungsstelle zu kühlen, um eine Beschädigung des Diamantwerkzeuges durch eine Überhitzung zu vermeiden. Die Schneidsegmente der Diamantwerkzeuge werden während des Bearbeitungsvorgangs mittels einer Kühlflüssigkeit gekühlt, um den Bearbeitungsvorgang zu unterstützen und die Lebensdauer der Schneidsegmente zu erhöhen. Aufgrund der hohen Leistungen der genannten elektrischen Wandsägen müssen neben dem Diamantwerkzeug auch die Motoren und die Leistungselektronik mit einem Kühlmedium gekühlt werden; eine Luftkühlung der Motoren und Leistungselektronik würde zu sehr großen und schweren Werkzeugeerätän führen, um die geforderten Kühlraten zu gewährleisten.

Eine dem Anmelder bekannte elektrische Wandsäge umfasst einen Sägekopf mit einem Sägeblatt, das an einem schwenkbaren Sägearm angeordnet und um eine Drehachse drehbar ausgebildet ist, wobei der Sägekopf über einen Führungsschlitten entlang einer Vorschubrichtung verschiebbar ist, eine Motorbaugruppe mit einem ersten Motor für die Drehbewegung des Sägeblattes um die Drehachse, einem zweiten Motor für die Schwenkbewegung des Sägearms und einem dritten Motor für die Vorschubbewegung des Führungsschlittens entlang der Vorschubrichtung, ein Motorgehäuse mit einem ersten Aufnahmeraum für den ersten Motor, einem zweiten Aufnahmeraum für den zweiten Motor und einem dritten Aufnahmeraum für den dritten Motor, ein Kühlelement zur Kühlung des ersten Motors und eine Elektronikbaugruppe mit mehreren zu kühlenden Elektronikkomponenten.

Eine als TS-5 bekannte elektrische Wandsäge umfasst ein Motorgehäuse für die Motorbaugruppe und ein Elektronikgehäuse für die Elektronikbaugruppe. Die zu kühlenden Elektronikkomponenten der Elektronikbaugruppe sind auf einem als Kühlplatte ausgebildeten Kühlelement montiert. Die Kühlplatte umfasst eine Kühlstruktur mit einem oder mehreren Kühlkanälen, die zur Kühlung von einem Kühlmedium durchströmt werden. Die Kühlung des Motors erfolgt über einen Kühlkanal, der den Motor spiralförmig umgibt. Das Kühlmedium strömt über einen Eingangsstutzen in das Elektronikgehäuse, durchströmt die Kühlplatte der Elektronikkühlung, anschließend den spiralförmigen Kühlkanal der Motorkühlung und von dort über eine Kühlbohrung in den Sägearm. Das Kühlmedium strömt über Ausgangsöffnungen im Sägeblattflansch und kühlt das Sägeblatt während der Bearbeitung.

Bei einer als TS-20 bekannten elektrischen Wandsäge ist die Elektronikbaugruppe nicht im Sägekopf, sondern in einer separaten Versorgungseinheit untergebracht. Die Elektronikkomponenten der Elektronikbaugruppe sind wie bei der TS-5 auf einer Kühlplatte, die eine Kühlstruktur mit Kühlkanal aufweist, montiert. Der Sägekopf ist über eine Leitung mit der Versorgungseinheit verbunden. Der Kühlkreislauf umfasst die Elektronikkühlung, die Motorkühlung und die Sägeblattkühlung.

Nachteilig ist, dass zur Kühlung der Elektronikbaugruppe eine Kühlplatte mit Kühlkanälen erforderlich ist. Außerdem wird die Elektronikbaugruppe von dem Kühlmedium durchströmt, was die Gefahr eines Kurzschlusses durch Feuchtigkeit erhöht.

Die Aufgabe der vorliegenden Erfindung besteht darin, die Kühlung der Elektronikbaugruppe zu vereinfachen und die Anzahl der benötigten Bauteile zur Elektronikkühlung zu reduzieren. Außerdem soll die Gefahr eines Kurzschlusses bei der Kühlung der Elektronikbaugruppe reduziert werden.

Diese Aufgabe wird bei der eingangs genannten elektrischen Wandsäge erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die Kühlung der zu kühlenden Elektronikkomponenten der Elektronikbaugruppe über das Motorgehäuse erfolgt und im Motorgehäuse drei Kühlflächen und eine Kühlbohrung vorgesehen sind, wobei für jede zu kühlende Elektronikkomponente der Elektronikbaugruppe mindestens eine Kühlfläche und/oder eine Kühlbohrung im Motorgehäuse vorgesehen ist. Durch die Integration von Kühlflächen und/oder Kühlbohrungen in das Motorgehäuse wird die Anzahl an Dichtstellen reduziert. Dadurch wird die Gefahr, dass die Elektronikkomponenten mit dem Kühlmedium in Kontakt kommen, reduziert. Da nur das Kühlelement von dem Kühlmedium durchströmt wird, ist die Anzahl der Dichtstellen reduziert. Diese Reduzierung verringert das Risiko, dass die Elektronikkomponenten mit dem Kühlmedium in Kontakt kommen und das Kühlmedium Schäden an den Elektronikkomponenten verursacht.

Vorteilhaft ist, dass die Größe der Kühlfläche an die zu kühlende Elektronikkomponente angepasst werden kann. So kann der verfügbare Bauraum des Motorgehäuses bestmöglich genutzt und das Werkzeuggerät kleiner und leichter ausgebildet werden.

Kühlbohrungen im Motorgehäuse bieten den Vorteil, dass zylinderförmige Elektronikkomponenten, wie beispielsweise Bremswiderstände, über die umgebenden Gehäuseflächen des Motorgehäuses gekühlt werden können. Der Bauraum des Motorgehäuses wird ausgenutzt und das Werkzeuggerät kann kleiner und leichter ausgebildet werden.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch In beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: ein erfindungsgemäßes elektrisches Werkzeuggerät in einer dreidimensionalen Darstellung mit einem Sägekopf, der ein Motorgehäuse, eine Motorbaugruppe und eine Elektronikbaugruppe aufweist;
- Fig. 2: das Motorgehäuse in einem Teilschnitt; und
- Fig. 3: einen Querschnitt durch das Motorgehäuse.

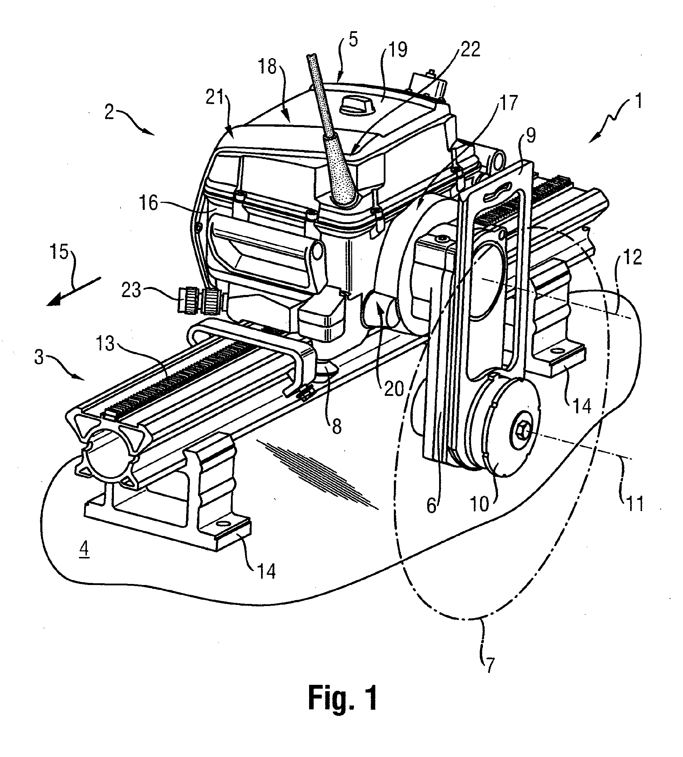

**Fig. 1** zeigt ein als elektrische Wandsäge **1** ausgebildetes erfindungsgemäßes elektrisches Werkzeuggerät in einer dreidimensionalen Darstellung. Die Wandsäge 1 besteht aus einer Sägeeinheit **2** und einer Befestigungseinrichtung **3** zur Befestigung der Sägeeinheit 2 an einem zu bearbeitenden Untergrund **4.**

Die Sägeeinheit 2 umfasst einen Sägekopf **5,** einen Sägearm **6,** an dem ein Sägeblatt **7** angeordnet ist, und einen Führungsschlitten **8.** Zum Schutz des Bedieners kann das Sägeblatt 7 von einem Sägeblattschutz umgeben sein, der mittels eines Blattschutzhalters **9** am Sägearm 6 angeordnet ist. Das Sägeblatt 7 ist an einem Sägeblattflansch **10** angeordnet und wird im Sägebetrieb um eine Drehachse **11** angetrieben. Der Sägearm 6 ist um eine Schwenkachse **12** schwenkbar ausgebildet. Die Sägeeinheit 2 ist mit der Befestigungseinrichtung 3 bestehend aus einer Führungsschiene **13** und Schienenfüßen **14** am zu bearbeitenden Untergrund 4 befestigt. Die Sägeeinheit 2 ist über den Führungsschlitten 8 auf der Führungsschiene 13 in einer Vorschubrichtung **15** sowie in einer Richtung entgegengesetzt zur Vorschubrichtung 15 längsverschiebbar angeordnet.

Der Sägekopf 5 umfasst ein Motorgehäuse **16,** eine Motorbaugruppe **17,** eine Elektronikbaugruppe **18** und einen Gehäusedeckel **19.** Die Motorbaugruppe 17 umfasst einen ersten Motor **20** für die Drehbewegung des Sägeblattes 7 um die Drehachse 11, einen zweiten Motor **21** für die Schwenkbewegung des Sägearms 6 um die Schwenkachse 12 und einen dritten Motor **22** für die Vorschubbewegung des Führungsschlittens 8 entlang der Vorschubrichtung 15. Die Elektronikbaugruppe 18 umfasst sämtliche Elektronikkomponenten der Leistungselektronik. Dazu gehören unter anderem Frequenzumrichter für die Motoren 20, 21, 22 und ein Bremswiderstand zum Vernichten von Bremsenergie beim Abbremsen des Sägeblattes 7.

Die Kühlung der Sägeeinheit 2 erfolgt über ein Kühlmedium, das beispielsweise als Kühlflüssigkeit, Kühlgas oder Druckluft ausgebildet ist. Das Kühlmedium ist in einem separaten Behälter bevorratet. Der Behälter ist über eine Zuführleitung mit einem Eingangsstutzen **23** verbunden, der seinerseits mit dem Motorgehäuse 16 verbunden ist.

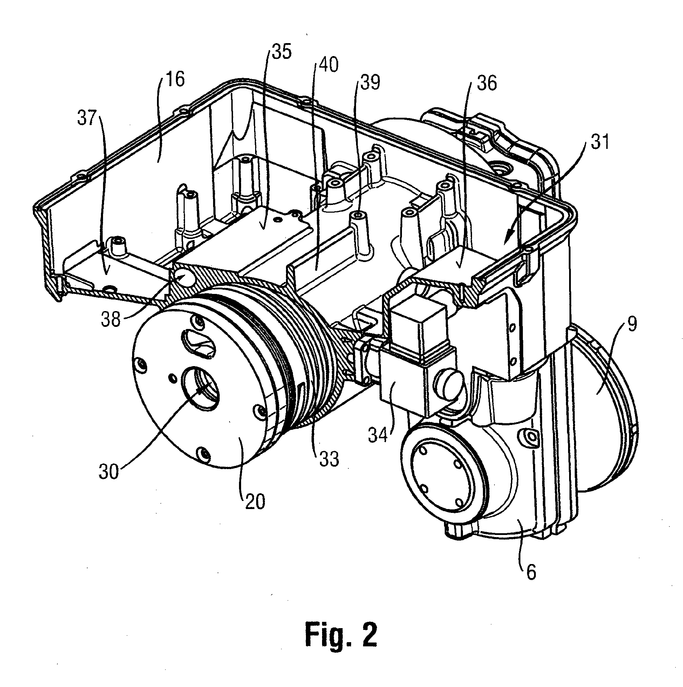

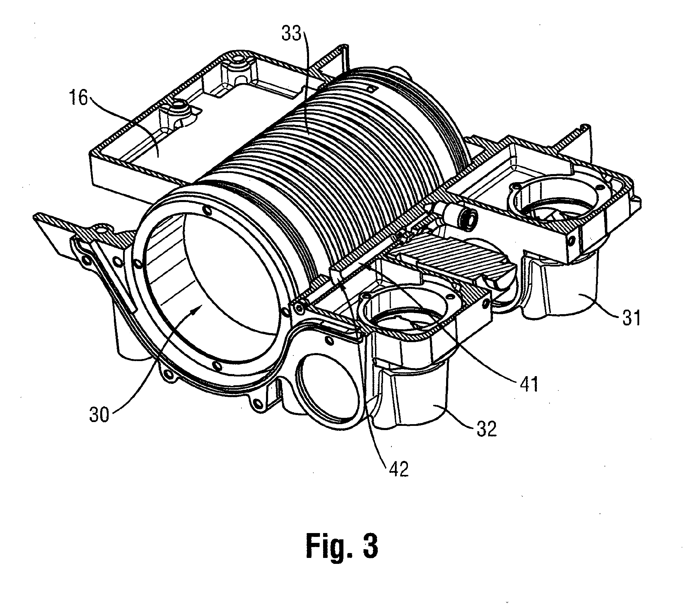

**Fig. 2** zeigt einen Teil des Motorgehäuses 16, in das der erste Motor 20 für die Drehbewegung des Sägeblattes 7 um die Drehachse 11 eingebaut ist. Das Motorgehäuse 16 umfasst einen ersten Aufnahmeraum **30** für den ersten Motor 20, einen zweiten Aufnahmeraum **31** für den zweiten Motor 21 und einen dritten Aufnahmeraum **32** (in Fig. 3) für den dritten Motor 22.

Die Kühlung des ersten Motors 20 erfolgt über einen spiralförmigen Kühlkanal **33,** der den ersten Motor 20 umgibt und von dem Kühlmedium durchströmt wird. Das Kühlmedium strömt aus dem Behälter über die Zuführleitung in das Motorgehäuse 16. Mit Hilfe einer Ventileinrichtung **34** wird die Zufuhr des Kühlmediums zum Kühlkanal 33 geregelt. Anstelle des spiralförmigen Kühlkanals 33 kann beispielsweise ein mäanderförmiger Kühlkanal verwendet werden. Außerdem können mehrere Kühlkanäle vorgesehen sein, die in Serie oder parallel geschaltet sind.

Im Motorgehäuse 16 sind drei Kühlflächen **35, 36, 37** und eine Kühlbohrung **38** vorgesehen. Auf der ersten Kühlfläche 35 wird ein Frequenzumrichter für den ersten Motor 20 positioniert und mit möglichst gutem Wärmeübergang mit dem Motorgehäuse 16 verbunden. Die erste Kühlfläche 35 ist sehr nahe zum Kühlkanal 33 angeordnet und insofern hinsichtlich der Kühlwirkung gegenüber der zweiten und dritten Kühlfläche 36, 37 bevorzugt. Die zu kühlenden Elektronikkomponenten werden so auf die Kühlflächen verteilt, dass die Elektronikkomponenten mit der stärksten Wärmeentwicklung möglichst nahe am Kühlkanal 33 angeordnet werden. Je geringer die Wärmeentwicklung ist, umso weiter entfernt vom Kühlkanal 33 kann die Elektronikkomponente angeordnet werden.

Um den Wärmeübergang aus den Elektronikkomponenten in das Motorgehäuse 16 zu verbessern, kann zwischen der Elektronikkomponente und der Kühlfläche 35, 36, 37 des Motorgehäuses 16 ein Wärmeleitpad oder eine Wärmeleitpaste vorgesehen werden. Da die Kühlung der Elektronikkomponenten der Elektronikbaugruppe 18 ausschließlich über das Motorgehäuse 16 erfolgt, muss ein ausreichender Wärmeübergang sichergestellt sein. Zur Befestigung der zu kühlenden Elektronikkomponenten am Motorgehäuse 16 sind Befestigungsdome **39** im Motorgehäuse 16 vorgesehen, die über Verstärkungsrippen **40** verbunden sind.

**Fig. 3** zeigt einen Querschnitt durch das Motorgehäuse 16 mit dem ersten Aufnahmeraum 30 für den ersten Motor 20, dem zweiten Aufnahmeraum 31 für den zweiten Motor 21 und den dritten Aufnahmeraum 32 für den dritten Motor 22.

Im Motorgehäuse 16 sind eine Längsbohrung **41** und eine, in die Längsbohrung 41 mündende Querbohrung **42** vorgesehen. Das Kühlmedium strömt aus der Ventileinrichtung 34 über die Längsbohrung 41 und die Querbohrung 42 in den Kühlkanal 33.

Nachdem das Kühlmedium den Kühlkanal 33 durchströmt hat, kann das Kühlmedium teilweise oder vollständig zur Kühlung des Sägeblattes 7 in den Sägearm 6 umgeleitet werden oder das Kühlmedium wird einer Absaug- oder Aufbereitungseinrichtung zugeführt. Mittels einer Reguliereinrichtung kann die Menge an Kühlmedium, die dem Sägeblatt 7 zur Kühlung zugeführt wird, eingestellt werden.

## Patentansprüche

1. Elektrische Wandsäge (1) zum Bearbeiten eines Untergrundes (4) bestehend aus
einem Sägekopf (5) mit einem Sägeblatt (7), das an einem schwenkbaren Sägearm (6) angeordnet und um eine Drehachse (11) drehbar ausgebildet ist, wobei der Sägekopf (5) über einen Führungsschlitten (8) entlang einer Vorschubrichtung (15) verschiebbar ist, einer Motorbaugruppe (17) mit einem ersten Motor (20) für die Drehbewegung des Sägeblattes (7) um die Drehachse (11), einem zweiten Motor (21) für die Schwenkbewegung des Sägearms (6) um eine Schwenkachse (12) und einem dritten Motor (22) für die Vorschubbewegung des Führungsschlittens (8) entlang der Vorschubrichtung (15),
einem Motorgehäuse (16) mit einem ersten Aufnahmeraum (30) für den ersten Motor (20), einem zweiten Aufnahmeraum (31) für den zweiten Motor (21) und einem dritten Aufnahmeraum (32) für den dritten Motor (22),
einem Kühlelement (33) zur Kühlung des ersten Motors (20),
einer Elektronikbaugruppe (18) mit mindestens einer zu kühlenden Elektronikkomponente, wobei die Elektronikbaugruppe (18) Frequenzumrichter für die Motoren (20, 21, 22) und einen Bremswiderstand zum Vernichten von Bremsenergie beim Abbremsen des Sägeblattes (7) umfasst,
**dadurch gekennzeichnet, dass**
die Kühlung der zu kühlenden Elektronikkomponenten über das Motorgehäuse (16) erfolgt und im Motorgehäuse (16) drei voneinander getrennte Kühlflächen (35, 36, 37) und eine Kühlbohrung (38) vorgesehen sind, wobei die zu kühlenden Elektronikkomponenten auf die Kühlfläche verteilt und darauf positioniert werden, wobei für jede zu kühlende Elektronikkomponente der Elektronikbaugruppe (18) mindestens eine Kühlfläche (35, 36, 37) und/oder eine Kühlbohrung (38) im Motorgehäuse (16) vorgesehen ist.

## Claims

1. An electric wall saw (1) for processing a substrate (4), consisting of:
a saw head (5) having a saw blade (7) mounted on a swivelling saw arm (6) and designed to rotate about a rotational axis (11), the saw head (5) being displaceable in a feed direction (15) via a guide carriage (8);
a motor assembly (17) comprising a first motor (20) for rotation of the saw blade (7) about the rotational axis (11), a second motor (21) for swivelling the saw arm (6) about a swivel axis (12) and a third motor (22) for the feed motion of the guide carriage (8) in the feed direction (15);
a motor housing (16) having a first space (30) for accommodating the first motor (20), a second space (31) for accommodating the second motor (21) and a third space (32) for accommodating the third motor (22);
a cooling element (33) for cooling the first motor (20);
an electronic assembly (18) having at least one electronic component to be cooled, the electronic assembly (18) including frequency converters for the motors (20, 21, 22) and a braking resistor for dissipating the braking energy upon braking of the saw blade (7),
**characterized in that**
cooling of the electronic components to be cooled is achieved via the motor housing (16), and three separate cooling surfaces (35, 36, 37) and a cooling bore (38) are provided in the motor housing (16), the electronic components to be cooled being distributed over the cooling surfaces and positioned thereon and at least one cooling surface (35, 36, 37) and/or one cooling bore (38) being provided in the motor housing (16) for each electronic component of the electronic assembly (18) to be cooled.

## Revendications

1. Scie murale électrique (1) destinée à usiner un substrat (4), constituée d'une tête de scie (5) ayant une lame de scie (7) qui est agencée sur un bras de scie (6) pivotant et qui est conçue de manière à pouvoir tourner autour d'un axe de rotation (11), dans laquelle la tête de scie (5) peut être déplacée le long d'un dispositif d'avance (15) par l'intermédiaire d'un chariot de guidage (8), un bloc moteur (17) comportant un premier moteur (20) pour le mouvement de rotation de la lame de scie (7) autour de l'axe de rotation (11), un deuxième moteur (21) pour le mouvement de pivotement du bras de scie (6) autour d'un axe de pivotement (12) et un troisième moteur (22) pour le mouvement d'avance du chariot de guidage (8) le long du dispositif d'avance (15), un carter de moteur (16) ayant un premier espace de réception (30) pour le premier moteur (20), un deuxième espace de réception (31) pour le deuxième moteur (21) et un troisième espace de réception (32) pour le troisième moteur (22),
un élément de refroidissement (33) pour le refroidissement du premier moteur (20),
un module électronique (18) ayant au moins un composant électronique à refroidir, dans lequel le module électronique (18) inclut des convertisseurs de fréquence pour les moteurs (20, 21, 22) et une résistance de freinage pour dissiper de l'énergie de freinage lors du ralentissement de la lame de scie (7),
**caractérisée en ce que**
le refroidissement des composants électroniques à refroidir s'effectue par l'intermédiaire du carter de moteur (16) et **en ce que**, dans le carter de moteur (16), sont prévues trois surfaces de refroidissement (35, 36, 37) séparées les unes des autres et un trou de refroidissement (38), les composants électroniques à refroidir étant répartis sur les surfaces de refroidissement et étant positionnés sur celles-ci, au moins une surface de refroidissement (35, 36, 37) et/ou un trou de refroidissement (38) étant prévu dans le carter de moteur (16) pour chacun des composants électroniques à refroidir du module électronique (18).
